# EUROPEAN PATENT APPLICATION

(11) **EP 4 841 934 A1**
(43) Date of publication of application: **18.11.2026**
(21) Application number: 24921586.4
(22) Date of filing: 31.10.2024
(51) Int. Cl.: H04L 9/40

(54) **ACCESS MODE DETECTION METHOD, APPARATUS, DEVICE, SYSTEM AND MEDIUM**

(30) Priority: 29.01.2024 CN 202410129645
(71) Applicant: Huawei Technologies Co., Ltd., Shenzhen, Guangdong 518129 (CN)
(72) Inventor: SUN, Chen, Shenzhen, Guangdong 518129 (CN); YAO, Qiang, Shenzhen, Guangdong 518129 (CN); YU, Bin, Shenzhen, Guangdong 518129 (CN); WEI, Hanyu, Shenzhen, Guangdong 518129 (CN); CHEN, Ling, Shenzhen, Guangdong 518129 (CN)
(74) Representative: Huawei European IPR
(86) International application number: PCT/CN2024/128903
(87) International publication number: WO 2025/161562

(57) **Abstract**

This application relates to the field of communication technologies, and discloses an access mode detection method, apparatus, device, and system, and a medium. The method includes: collecting a data feature of data transmitted by an access device, where the data feature indicates a feature of a terminal device that transmits the data, the terminal device is connected to the access device, and the data feature includes at least one of a packet feature, a flow behavior feature, a network feature, or a device physical feature; and determining an access mode of the terminal device based on the data feature. Because the data feature of the data transmitted by the access device at an access layer is collected, when the data arrives at the access layer, access mode detection can be performed. In comparison with a centralized unauthorized access prevention method, the method can compensate for detection of data that arrives at the access layer but does not arrive at a core layer, so that the access mode detection can be performed in a more timely and comprehensive manner. In addition, there are a large quantity of types of collected data features, so that a probability of detecting an unauthorized terminal device is higher, and accuracy of the access mode detection is improved.

## Description

This application claims priority to Chinese Patent Application No. 202410129645.9, filed on January 29, 2024 and entitled "ACCESS MODE DETECTION METHOD, APPARATUS, DEVICE, AND SYSTEM, AND MEDIUM", which is incorporated herein by reference in its entirety.

### TECHNICAL FIELD

This application relates to the field of communication technologies, and in particular, to an access mode detection method, apparatus, device, and system, and a medium.

### BACKGROUND

In the field of communication technologies, a terminal device in a campus network can access a network only after being authorized and authenticated. However, unauthorized access of users is widespread in a campus network, which makes campus network management difficult. Unauthorized access is unauthorized access to the network without authorization and authentication. For example, unauthorized access of a plurality of terminal devices over an unauthorized router brings an insecure factor to the network; unauthorized access of a plurality of terminal devices by sharing a wireless network by a terminal device causes users to unauthorizedly access the network; or expanding network ports through an unauthorized hub may cause a network loop or even cause network unavailability.

In a related technology, a centralized unauthorized access prevention method is used to mirror traffic of a core-layer switch to an unauthorized access detection engine, and the unauthorized access detection engine analyzes mirrored traffic to detect an unauthorized terminal device based on an analysis result. When the unauthorized terminal device is detected, an access control list (access control list, ACL) is delivered to the core-layer switch, so that the core-layer switch blocks the terminal device based on the ACL.

In the foregoing centralized unauthorized access prevention method, the traffic can be detected only after reaching the core-layer switch, and the traffic needs to be then mirrored by the core-layer switch to the unauthorized access detection engine for detection. In this case, there are problems of untimely detection and poor security performance.

### SUMMARY

This application provides an access mode detection method, apparatus, device, and system, and a medium, to detect an access mode of a terminal device connected to a network.

According to a first aspect, this application provides an access mode detection method. The method includes: collecting a data feature of data transmitted by an access device, where the data feature indicates a feature of a terminal device that transmits the data, the terminal device is connected to the access device, and the data feature includes at least one of a packet feature, a flow behavior feature, a network feature, or a device physical feature; and determining an access mode of the terminal device based on the data feature.

In the method, because the data feature of the data transmitted by the access device at an access layer is collected, when the data arrives at the access layer, access mode detection can be performed. In comparison with a centralized unauthorized access prevention method in a related technology, the method can compensate for detection of data that arrives at the access layer but does not arrive at a core layer, so that the access mode detection can be performed in a more timely and comprehensive manner. In addition, there are a large quantity of types of data features that can be collected at the access layer, so that a probability of detecting an unauthorized terminal device is higher, and accuracy of the access mode detection is improved.

In a possible implementation, the data feature includes a plurality of packet features; and determining the access mode of the terminal device based on the data feature may include: identifying an operating system under an access port of the terminal device based on the plurality of packet features; and when operating systems under the access port are different, determining that the access mode of the terminal device is unauthorized access. The access port of the terminal device is a port that is on the access device and that is connected to the terminal device.

In this manner, the operating system under the access port is identified by the packet feature. Different operating systems indicate that a plurality of operating systems access a network through the access port, and the plurality of operating systems represent a plurality of user programs that run independently, in other words, a phenomenon in which a plurality of users share the access port exists. When the access mode is authorized access, one port of the access device corresponds to one operating system. Therefore, it can be quickly and accurately detected, by identifying different operating systems, that the access mode of the terminal device is unauthorized access.

In a possible implementation, identifying the operating system under the access port of the terminal device based on the plurality of packet features may include: identifying address information on the access port of the terminal device based on the plurality of packet features; and when the address information on the access port is the same, identifying the operating system under the access port of the terminal device based on the plurality of packet features. The method further includes: when the address information on the access port is different, determining that the access mode of the terminal device is unauthorized access.

In this manner, the address information on the access port is first identified by the packet feature. Different address information indicates that a plurality of user terminals with different addresses access the network through the access port. When the access mode is authorized access, one port of the access device corresponds to one user terminal. Therefore, it can be quickly and accurately detected, by identifying different address information, that the access mode of the terminal device is unauthorized access. When the address information is the same, there may be two cases. In a first case, the access mode of the terminal device connected to the access port is authorized access. In a second case, a plurality of user terminals masquerade as having same address information to perform data transmission. Further, when it is determined that the address information is the same, the operating system is further identified to perform unauthorized access detection, so as to ensure accuracy of the unauthorized access detection.

In a possible implementation, the data feature includes the flow behavior feature; and determining the access mode of the terminal device based on the data feature may include: obtaining a deviation distance between the flow behavior feature and a reference feature, where the reference feature is a flow behavior feature of data transmitted by a terminal device whose access mode is authorized access; and when the deviation distance is greater than a deviation threshold, determining that the access mode of the terminal device is unauthorized access.

A flow behavior feature of data transmitted by an authorized terminal device is different from a flow behavior feature of data transmitted by an unauthorized terminal device. For example, the terminal device whose access mode is authorized access corresponds to a single terminal, the terminal device whose access mode is unauthorized access corresponds to a plurality of terminals, and a flow behavior feature of data transmitted by a single terminal device is different from a flow behavior feature of data transmitted by a plurality of terminal devices. Therefore, a deviation is obtained by comparing the collected flow behavior feature of the data transmitted by the terminal device and the flow behavior feature of the data transmitted by the authorized terminal device, so that it can be quickly and accurately detected that the access mode of the terminal device is unauthorized access.

In a possible implementation, the data feature includes at least one of the network feature or the device physical feature; and determining the access mode of the terminal device based on the data feature may include: identifying a type of the terminal device based on at least one of the network feature or the device physical feature; and when the type of the terminal device is a router or a hub, determining that the access mode of the terminal device is unauthorized access.

The router or the hub is a device configured to connect a plurality of terminals together. When the access mode is authorized access, the terminal device connected to the access device corresponds to one terminal. Therefore, it can be quickly and accurately detected, by identifying the router or the hub, that the access mode of the terminal device is unauthorized access. In addition, on the basis of being capable of detecting that the access mode of the terminal device is unauthorized access, it can be further determined whether an unauthorized access type is an unauthorized router or an unauthorized hub, so that a result of unauthorized access detection is more accurate, and the unauthorized access type can further provide help for subsequent implementation of blocking unauthorized access.

In a possible implementation, after the access mode of the terminal device is determined based on the data feature, when the access mode of the terminal device is unauthorized access, the terminal device may be blocked from transmitting data. In this way, a network security problem caused by an unauthorized terminal device is avoided and network management and maintenance are facilitated. Optionally, the access device may directly block the terminal device from transmitting the data; or may send unauthorized access information of the terminal device to a management device, and the management device blocks, based on the unauthorized access information, the terminal device from transmitting the data. Therefore, two blocking paths are provided, so that a blocking manner is flexible. Blocking performed by the access device may reduce overheads of the management device, and blocking performed by the management device may reduce an amount of data processed by the access device.

In a possible implementation, a manner of blocking the terminal device from transmitting the data includes but is not limited to: shutting down the access port of the terminal device, so that the access port no longer receives data; adding the address information of the terminal device to a blocklist, where the blocklist is used to block, from transmitting data, a terminal device corresponding to address information in the blocklist, so that the access device can no longer forward data including the address information; or disconnecting a user in an online state on the terminal device, so that the terminal device exits the network, in other words, the terminal device cannot send data to the access device. Therefore, three manners of blocking the terminal device from transmitting the data are provided, so that different blocking manners can be flexibly selected based on different scenarios.

In a possible implementation, the data transmitted by the access device is data that flows from a terminal side to a network side, that is, a data flow direction of the collected data is an uplink direction from the terminal side to the network side. In this way, the method can accurately perform unauthorized access detection on uplink data, to avoid misjudgment caused by detection of downlink data, and improve accuracy of the unauthorized access detection.

In a possible implementation, before the data feature of the data transmitted by the access device is collected, an unauthorized access detection configuration command sent by the management device is received, to trigger, according to the unauthorized access detection configuration command, collection of the data feature of the data transmitted by the access device. In this manner, the data feature collection can be flexibly triggered according to the unauthorized access detection configuration command, that is, the unauthorized access detection is triggered, and different unauthorized access detection configuration commands can be set based on different user requirements, so that implementation of the unauthorized access detection better meets the user requirements.

In a possible implementation, a manner of collecting the data feature of the data transmitted by the access device includes: collecting the data feature in a process of transmitting the data, that is, collecting the data feature with a flow; or first copying the data transmitted by the access device, to obtain copied data, and then collecting a data feature of the copied data. Therefore, two data feature collection manners are provided, so that the data feature collection is flexible. Collecting the data feature with the flow can improve data feature collection efficiency, and collecting the copied data can avoid impact on data transmission.

In a possible implementation, the access device is a first-hop forwarding device for data sent by the terminal device, that is, the terminal device is directly connected to the access device. In this manner, the access device is a device that is of a network edge and that is close to the terminal side. Performing unauthorized access detection at the network edge can implement unauthorized access detection on all data entering the network, to improve comprehensiveness of the unauthorized access detection and network security. In addition, data transmitted over the network edge is not forwarded and processed by a network device, and more features indicating terminal devices can be reserved, so that data features collected based on the data transmitted over the network edge are more comprehensive.

According to a second aspect, this application provides another access mode detection method. The method includes: receiving unauthorized access information that is of a terminal device and that is sent by an access device, where the unauthorized access information indicates that an access mode of the terminal device is unauthorized access; and sending unauthorized access alarm information.

In the method, when the terminal device is unauthorizedly accessed, the unauthorized access alarm information can be sent in time, so that a user can process the unauthorized terminal device in time. In this way, network security is improved.

In a possible implementation, after the unauthorized access information that is of the terminal device and that is sent by the access device is received, the terminal device may be further blocked from transmitting data. In this way, a network security problem caused by an unauthorized terminal device is avoided and data security in a network is ensured.

In a possible implementation, a manner of blocking the terminal device from transmitting the data includes but is not limited to: sending a shutdown instruction to the access device, where the shutdown instruction is used by the access device to shut down an access port of the terminal device; sending a blocklist to the access device, where the blocklist includes address information of the terminal device, and the blocklist is used by the access device to block, from transmitting data, a terminal device corresponding to address information in the blocklist; or sending an offline instruction to the access device, where the offline instruction is used by the access device to disconnect a user in an online state on the terminal device. In this manner, three blocking manners are provided, and proper blocking manners can be flexibly selected based on different scenarios.

In a possible implementation, after receiving the unauthorized access information that is of the terminal device and that is sent by the access device, the method further includes: visually presenting the unauthorized access information of the terminal device, where the unauthorized access information includes at least one of a MAC (medium access control, medium access control) address, an internet protocol (internet protocol, IP) address, the access port, access time, an unauthorized access type, or an unauthorized access determining reason. In this manner, the unauthorized access information is visually presented, so that the user can clearly view an unauthorized access status and perform network operations and maintenance management.

In a possible implementation, before the unauthorized access information that is of the terminal device and that is sent by the access device is received, an unauthorized access detection configuration command is further sent to the access device, so that the access device triggers, according to the unauthorized access detection configuration command, collection of a data feature of data transmitted by the access device, and determines the access mode of the terminal device based on the data feature.

According to a third aspect, an access mode detection apparatus is provided. The apparatus includes:
a collection module, configured to collect a data feature of data transmitted by an access device, where the data feature indicates a feature of a terminal device that transmits the data, the terminal device is connected to the access device, and the data feature includes at least one of a packet feature, a flow behavior feature, a network feature, or a device physical feature; and
a determining module, configured to determine an access mode of the terminal device based on the data feature.

In a possible implementation, the data feature includes a plurality of packet features; and the determining module is configured to: identify an operating system under an access port of the terminal device based on the plurality of packet features; and when operating systems under the access port are different, determine that the access mode of the terminal device is unauthorized access.

In a possible implementation, the determining module is configured to: identify address information on the access port of the terminal device based on the plurality of packet features; and when the address information on the access port is the same, identify the operating system under the access port of the terminal device based on the plurality of packet features; and
the determining module is further configured to: when the address information on the access port is different, determine that the access mode of the terminal device is unauthorized access.

In a possible implementation, the data feature includes the flow behavior feature; and the determining module is configured to: obtain a deviation distance between the flow behavior feature and a reference feature, where the reference feature is a flow behavior feature of data transmitted by a terminal device whose access mode is authorized access; and when the deviation distance is greater than a deviation threshold, determine that the access mode of the terminal device is unauthorized access.

In a possible implementation, the data feature includes at least one of the network feature or the device physical feature; and the determining module is configured to: identify a type of the terminal device based on at least one of the network feature or the device physical feature; and when the type of the terminal device is a router or a hub, determine that the access mode of the terminal device is unauthorized access.

In a possible implementation, the apparatus further includes a blocking module, configured to: when the access mode of the terminal device is unauthorized access, block the terminal device from transmitting data. Alternatively, the apparatus further includes a sending module, configured to: when the access mode of the terminal device is unauthorized access, send unauthorized access information of the terminal device to a management device, where the unauthorized access information is used by the management device to block the terminal device from transmitting data.

In a possible implementation, the blocking module is configured to shut down the access port of the terminal device; add the address information of the terminal device to a blocklist, where the blocklist is used to block, from transmitting data, a terminal device corresponding to address information in the blocklist; or disconnect a user in an online state on the terminal device.

In a possible implementation, the data transmitted by the access device is data that flows from a terminal side to a network side.

In a possible implementation, the apparatus further includes a receiving module, configured to receive an unauthorized access detection configuration command sent by the management device. In this case, the collection module is configured to collect, according to the unauthorized access detection configuration command, the data feature of the data transmitted by the access device.

In a possible implementation, the apparatus further includes a copying module, configured to copy the data transmitted by the access device, to obtain copied data. In this case, the collection module is configured to collect a data feature of the copied data.

In a possible implementation, the access device is a first-hop forwarding device for data sent by the terminal device.

According to a fourth aspect, another access mode detection apparatus is provided. The apparatus includes:
a receiving module, configured to receive unauthorized access information that is of a terminal device and that is sent by an access device, where the unauthorized access information indicates that an access mode of the terminal device is unauthorized access; and
an alarm module, configured to send unauthorized access alarm information.

In a possible implementation, the apparatus further includes a blocking module, configured to block the terminal device from transmitting data.

In a possible implementation, the blocking module is configured to: send a shutdown instruction to the access device, where the shutdown instruction is used by the access device to shut down an access port of the terminal device; send a blocklist to the access device, where the blocklist includes address information of the terminal device, and the blocklist is used by the access device to block, from transmitting data, a terminal device corresponding to address information in the blocklist; or send an offline instruction to the access device, where the offline instruction is used by the access device to disconnect a user in an online state on the terminal device.

In a possible implementation, the apparatus further includes a visual presentation module, configured to visually present the unauthorized access information of the terminal device, where the unauthorized access information includes at least one of a MAC address, an IP address, the access port, access time, an unauthorized access type, or an unauthorized access determining reason.

In a possible implementation, the apparatus further includes a sending module, configured to send an unauthorized access detection configuration command to the access device, where the unauthorized access detection configuration command is used by the access device to collect a data feature of data transmitted by the access device, and determine the access mode of the terminal device based on the data feature.

According to a fifth aspect, an access mode detection device is provided. The device includes a memory and a processor. The memory stores at least one computer instruction, and the at least one computer instruction is loaded and executed by the processor, to enable the access mode detection device to implement the access mode detection method in any one of the first aspect or the possible implementations of the first aspect, or enable the access mode detection device to implement the access mode detection method in any one of the second aspect or the possible implementations of the second aspect.

According to a sixth aspect, an access mode detection system is provided. The system includes an access device and a management device. The access device is configured to perform the access mode detection method in any one of the first aspect or the possible implementations of the first aspect, and the management device is configured to perform the access mode detection method in any one of the second aspect or the possible implementations of the second aspect.

According to a seventh aspect, a computer-readable storage medium is provided. The storage medium stores at least one instruction, and the instruction is loaded and executed by a processor, to enable a computer to implement the access mode detection method in the foregoing aspects.

According to an eighth aspect, a computer program (product) is provided. When the computer program is executed by a computer, a processor or the computer may be enabled to perform the access mode detection method in the foregoing aspects.

According to a ninth aspect, a chip is provided, including a processor, configured to: invoke, from a memory, instructions stored in the memory, and run the instructions, to enable a computer in which the chip is installed to perform the access mode detection method in the foregoing aspects.

According to a tenth aspect, another chip is provided, including an input interface, an output interface, a processor, and a memory. The input interface, the output interface, the processor, and the memory are connected through an internal connection path. The processor is configured to execute code in the memory. When the code is executed, a computer in which the chip is installed performs the access mode detection method in the foregoing aspects.

It should be understood that, for beneficial effects achieved by the technical solutions of the third aspect to the tenth aspect and corresponding possible implementations of the technical solutions of the third aspect to the tenth aspect in this application, refer to the technical effects of the first aspect, the second aspect, and the corresponding possible implementations of the first aspect and the second aspect. Details are not described herein again. In addition, the access mode detection apparatus mentioned in the third aspect or the fourth aspect may be the chip mentioned in the ninth aspect or the tenth aspect, or the access mode detection apparatus may be the device mentioned in the fifth aspect.

### BRIEF DESCRIPTION OF DRAWINGS

FIG. 1 is a diagram of a structure of connection of a campus network according to an embodiment of this application;
FIG. 2 is a diagram of a network connection scenario corresponding to a related technology according to an embodiment of this application;
FIG. 3 is a flowchart of an access mode detection method according to an embodiment of this application;
FIG. 4 is a diagram of an access mode detection scenario according to an embodiment of this application;
FIG. 5 is an interaction diagram of an access mode detection method according to an embodiment of this application;
FIG. 6 is a diagram of another access mode detection scenario according to an embodiment of this application;
FIG. 7 is a diagram of still another access mode detection scenario according to an embodiment of this application;
FIG. 8 is a diagram of a structure of an access mode detection apparatus according to an embodiment of this application;
FIG. 9 is a diagram of a structure of another access mode detection apparatus according to an embodiment of this application;
FIG. 10 is a diagram of a structure of a network device according to an embodiment of this application; and
FIG. 11 is a diagram of a structure of another network device according to an embodiment of this application.

### DESCRIPTION OF EMBODIMENTS

To make the objectives, technical solutions, and advantages of this application clearer, the following further describes implementations of this application in detail with reference to accompanying drawings.

In the field of communication technologies, unauthorized access of users is becoming increasingly common in a campus network. Unauthorized access may affect normal running of the campus network, which makes network management difficult. Unauthorized access modes include but are not limited to: connecting a plurality of terminal devices to a network through an unauthorized access router, unauthorizedly accessing and using a network by sharing a wireless network by a terminal device, or expanding a quantity of network ports through an unauthorized access hub.

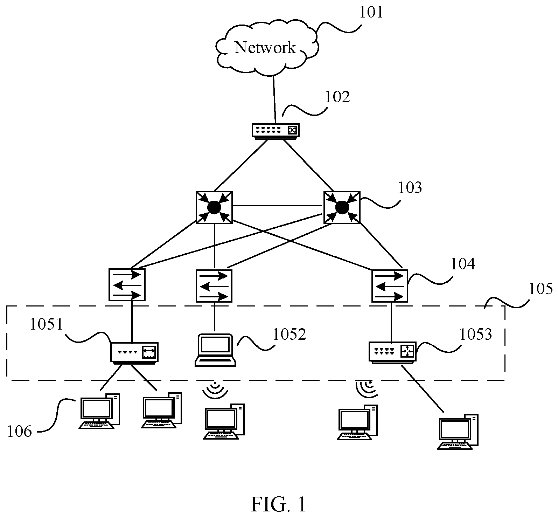

Refer to a diagram of a structure of connection of a campus network shown in FIG. 1. A terminal device 105 in the campus network is connected to an external network 101 through an access-layer switch 104, an aggregation-layer switch 103, and a core-layer switch 102. The core-layer switch 102 is configured to: select a route, perform high-speed forwarding, and provide an optimized and reliable backbone transmission structure. The aggregation-layer switch 103 is an aggregation point of a plurality of access-layer switches 104, and is configured to implement data forwarding between an access layer and a core layer. The access-layer switch 104 is configured to connect the terminal device 105 to the network, and the access-layer switch 104 has features of low costs and high port density.

For example, FIG. 1 shows the following three unauthorized access modes. In a first mode, an unauthorized terminal device 105 is a hub (HUB) 1051. The hub 1051 is connected to a plurality of unauthorized terminals 106. This may cause a network loop or even cause network unavailability. The network loop means that data is continuously and circularly forwarded in a network path instead of being correctly sent to a destination. This occupies a large quantity of network resources, and may cause network performance deterioration or even network breakdown. For example, the unauthorized terminal 106 includes but is not limited to a device like a mobile phone, a tablet computer, a desktop computer, a printer, or a projector.

In a second mode, an unauthorized terminal device 1052 shares the network wirelessly with another unauthorized terminal 106. In a third mode, an unauthorized terminal device 105 is a router 1053. For the second and third unauthorized access modes, sharing the network and connecting to the router 1053 cause unauthorized use of the network by a user over the shared network or the router 1053. This affects data security in the campus network. In addition, for the third unauthorized access mode, if the router 1053 is connected to an access point (access point, AP) over a wireless network (not shown in FIG. 1), a signal sent by the router 1053 causes interference to a wireless connection between the AP and another terminal device 105. In this case, user experience of using the network is deteriorated. The AP is an access-layer switch 104, and may also be referred to as a wireless access point.

The foregoing phenomenon of unauthorized access poses a threat to stability and security of the campus network. Therefore, a method is needed to identify an unauthorized terminal device in the network, to manage and control the unauthorized terminal device, and maintain normal running of the network.

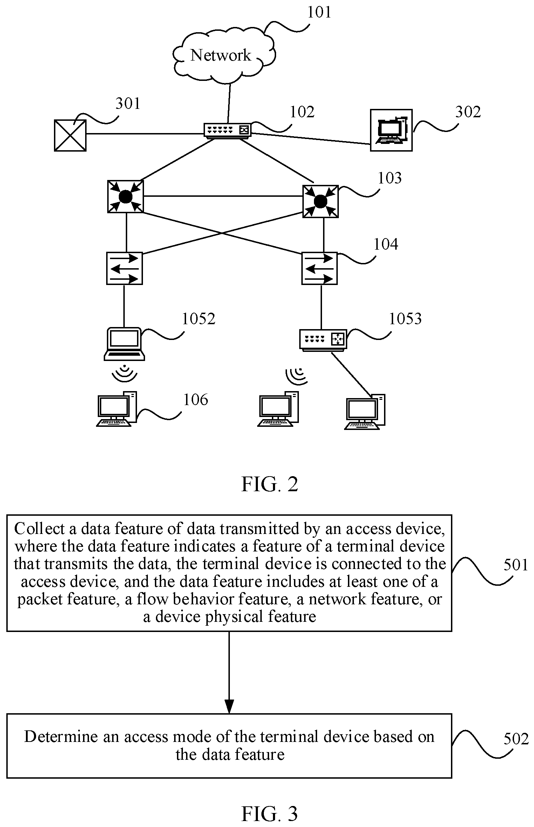

In a related technology, refer to FIG. 2, a core-layer switch 102 is connected to an unauthorized access detection device 301 and a management device 302. An administrator configures traffic mirroring for the core-layer switch 102 over the management device 302, that is, configures a mirroring standard of data on the core-layer switch 102, for example, a mirroring location and an amount of mirrored data. The management device 302 sends an enable command to the unauthorized access detection device 301, to control, according to the enable command, the unauthorized access detection device 301 to start to run. Then, the core-layer switch 102 mirrors transmitted data to the unauthorized access detection device 301; and the unauthorized access detection device 301 performs unauthorized access detection on mirrored data based on a source IP, determines unauthorized access information of an unauthorized terminal device, and synchronizes the unauthorized access information to the management device 302. A user can view the unauthorized access information over the management device 302 and configure blocking of unauthorized access based on the unauthorized access information. For example, the management device 302 delivers a blocking ACL to the core-layer switch 102, and the core-layer switch 102 blocks, based on the blocking ACL, data transmission of the unauthorized terminal device.

However, in the related technology, traffic can be detected only after reaching the core-layer switch 102. For data that does not reach the core-layer switch 102, for example, data that is sent by any terminal device 105 and that is forwarded to another terminal device 105 through an access-layer switch 104, an aggregation-layer switch 103, and an access-layer switch 104, unauthorized access detection cannot be performed. In this case, it is difficult to ensure network security of an aggregation layer and below the aggregation layer. In addition, the traffic needs to be mirrored by the core-layer switch 102 to the unauthorized access detection device 301 for detection. A data mirroring process takes long time. Consequently, unauthorized access is not processed in time.

An embodiment of this application provides an access mode detection method. An example in which an access device performs the method is used for description. The access device may be an access-layer switch, an access gateway, or an AP. For example, the access device may be the access-layer switch 104 shown in FIG. 1. As shown in FIG. 3, the method includes but is not limited to the following step 501 and step 502.

Step 501: Collect a data feature of data transmitted by the access device, where the data feature indicates a feature of a terminal device that transmits the data, the terminal device is connected to the access device, and the data feature includes at least one of a packet feature, a flow behavior feature, a network feature, or a device physical feature.

In embodiments of this application, the access device is connected to the terminal device, and the access device may receive data sent by the terminal device to a network side. Collecting the data feature of the data transmitted by the access device includes: collecting the data feature of the data that is sent by the terminal device and that is received by the access device, so that the data feature can indicate the feature of the terminal device. Optionally, a feature type included in the data feature is not limited in embodiments of this application, and may include at least one of the packet feature, the flow behavior feature, the network feature, or the device physical feature.

The packet feature is a feature carried in a packet of the transmitted data. Optionally, the packet feature includes at least one of user agent (user agent, UA) information, a transfer control protocol (transfer control protocol, TCP)/IP protocol stack fingerprint, or a domain name resolution service (domain name service, DNS) domain name fingerprint. The user agent (user agent, UA) information is an identifier that identifies a browser or another application program on a terminal side. Information about the terminal side, such as a browser type, a browser version, an operating system, and hardware, can be determined by analyzing the UA information. The DNS domain name fingerprint is used to identify and confirm identity information of a domain name by analyzing a feature of a DNS record. Different operating systems generate DNS records in different manners. A type and a version of the operating system can be determined based on a DNS record generation manner.

The TCP/IP protocol stack fingerprint is information that identifies a network protocol. A protocol stack of the operating system can be determined by analyzing the TCP/IP protocol stack fingerprint. There is a slight difference between protocol stacks of different operating systems, and the difference may be referred to as a fingerprint of a network protocol stack. For a TCP/IP protocol suite, the difference is reflected in flag fields of data packet headers, for example, different values of a window size (window size), an acknowledgment (acknowledgment, ACK) sequence number, and time to live (time to live, TTL). Therefore, different operating systems using different protocol stacks can be identified by the TCP/IP protocol stack fingerprint.

The network feature is a feature carried in a network transmission process. Optionally, the network feature includes at least one of a link layer discovery protocol (link layer discovery protocol, LLDP) fingerprint and a medium access control address organizationally unique identifier (media access control address organizationally unique identifier, MAC OUI) fingerprint.

The LLDP fingerprint identifies a standard protocol of an automatically discovered terminal device and an attribute of the terminal device. The LLDP fingerprint includes information such as a manufacturer, a device model, and device descriptions of the terminal device. A type and an attribute of the terminal device, for example, a hub or a router, can be identified by comparing the information in the LLDP fingerprint with a known device manufacturer and device model database for matching. The MAC OUI fingerprint is an OUI part of a MAC address. The MAC address is a unique identifier of a network device and is allocated by the manufacturer of the terminal device. The type of the terminal device can be identified by comparing the OUI part of the MAC address with the known manufacturer database for matching.

The flow behavior feature is a feature presented by a data flow in a transmission process. Optionally, the flow behavior feature includes at least one of a transmission frequency or a sending interval of the data flow. Because there is a deviation between a flow behavior of a data flow of data sent by an authorized terminal device and a flow behavior of a data flow sent by an unauthorized terminal device, the flow behavior feature may identify an access mode of the terminal device. In addition, the data that is sent by the terminal device and that is received by the access device is not shaped and sorted, so that an original sequence of the data sent by the terminal device is retained, that is, a flow behavior feature of accessing a network by the terminal device is retained. In this way, the collected flow behavior feature of the data transmitted by the access device can indicate the feature of the terminal device.

The device physical feature is a feature of a signal when a device transmits data. Optionally, the device physical feature includes at least one of a slope, a voltage, an average value of voltage differences, a variance of voltage differences, a kurtosis of a voltage difference, or a mean square value of voltage differences that are of a transient signal amplitude of a data frame. Different types of terminal devices have different device physical features, and different types of terminal devices can be identified by the device physical features.

In a possible implementation, a manner of collecting the data feature of the data transmitted by the access device includes: collecting the data feature in a process of transmitting the data, that is, collecting the data feature with a flow; or first copying the data transmitted by the access device, to obtain copied data, and then collecting a data feature of the copied data. Because the copied data is a complete copy of the original data, and includes all data content of the original data, the collected data feature of the copied data is the collected data feature of the original data. Therefore, two data feature collection manners are provided, so that the data feature collection is flexible. Collecting the data feature with the flow can improve data feature collection efficiency, and collecting the copied data can avoid impact on data transmission.

In embodiments of this application, the access device is a first-hop forwarding device for data sent by the terminal device, that is, the terminal device is directly connected to the access device. In this manner, the access device is a device that is of a network edge and that is close to the terminal side. Performing unauthorized access detection at the network edge can implement unauthorized access detection on all data entering the network, to improve comprehensiveness of the unauthorized access detection and network security. In addition, data transmitted over the network edge is not forwarded and processed by a network device, and more features indicating terminal devices can be reserved, so that data features collected based on the data transmitted over the network edge are more comprehensive.

In a communication network, data may be transmitted bidirectionally between the terminal side and the network side. Data that flows from the terminal side to the network side is referred to as uplink data, and data that flows from the network side to the terminal side is referred to as downlink data. The transmitted data collected by the access device is data that flows from the terminal side to the network side, that is, a data flow direction of the collected data is an uplink direction from the terminal side to the network side. For example, the access device identifies the uplink data based on the data flow direction, and collects a data feature of the transmitted uplink data; or the access device identifies, based on the data flow direction, an uplink port that receives the uplink data, and collects a data feature of data received through the uplink port.

In this way, the method can accurately perform unauthorized access detection on the uplink data, to avoid misjudgment caused by detection of the downlink data, and improve accuracy of the unauthorized access detection. For example, misjudgment caused by downlink data sent by a DNS server or a server virtual machine is avoided.

In a possible implementation, a process of collecting the data feature of the data transmitted by the access device includes: collecting, according to an unauthorized access detection configuration command, the data feature of the data transmitted by the access device. The unauthorized access detection configuration command usually includes specific configuration information about how to perform unauthorized access detection, for example, specific data features to be collected and how to process and analyze data. The access device can perform a corresponding data feature collection operation according to the unauthorized access detection configuration command. For example, the data feature starts to be collected according to an instruction of the unauthorized access detection configuration command when the unauthorized access detection configuration command is received. The data feature collection includes traffic analysis, protocol parsing, data packet capture, and the like. Data collection depends on a requirement of a configuration command.

Step 502: Determine the access mode of the terminal device based on the data feature.

In embodiments of this application, the access mode of the terminal device is classified into two types: unauthorized access and authorized access. Unauthorized access is access to the network without authorization or in violation of a network regulation, for example, unauthorized device access and malicious intrusion. Authorized access is access to the network after authorization and authentication.

Because the data feature may include at least one of the packet feature, the flow behavior feature, the network feature, or the device physical feature, when the data feature includes different feature combinations, implementations of determining the access mode of the terminal device based on the data feature are also different, including but not limited to the following several implementations.

Manner 1: The data feature includes the packet feature.

Optionally, a process of determining the access mode of the terminal device based on the data feature includes: identifying an operating system under an access port of the terminal device based on a plurality of packet features; and when operating systems under the access port are different, determining that the access mode of the terminal device is unauthorized access. The access port of the terminal device is a port that is on the access device and that is connected to the terminal device. The operating system under the access port is identified by the packet feature. Different operating systems indicate that a plurality of operating systems access the network through the access port, and the plurality of operating systems represent a plurality of user programs that run independently, in other words, a phenomenon in which a plurality of users share the access port exists. When the access mode is authorized access, one port of the access device corresponds to one operating system. Therefore, it can be quickly and accurately detected, by identifying different operating systems, that the access mode of the terminal device is unauthorized access.

The packet feature includes but is not limited to at least one of the UA information, the TCP/IP protocol stack fingerprint, or the DNS domain name fingerprint, and can reflect operating system information of the terminal device. For example, a manner of identifying the operating system under the access port of the terminal device based on the plurality of packet features includes: matching the plurality of packet features of the data received through the access port of the terminal device with a packet feature of a known operating system, and determining that a successfully matched operating system is the operating system under the access port.

Optionally, determining the access mode of the terminal device based on the data feature may include: identifying address information on the access port of the terminal device based on the plurality of packet features; and when the address information on the access port is the same, identifying the operating system under the access port of the terminal device based on the plurality of packet features, and if the operating systems under the access port are different, determining that the access mode of the terminal device is unauthorized access; or when the address information on the access port is different, directly determining that the access mode of the terminal device is unauthorized access.

The packet feature further includes address information of a transmitter of the data, and the address information includes at least one of an IP address or a MAC address. For example, for the data received through the access port of the terminal device, if address information of transmitters of all data is the same, it is determined that the address information on the access port is the same; or if data with different address information of transmitters exists, it is determined that the address information on the access port is different.

In this manner, the address information on the access port is first identified by the packet feature. Different address information indicates that a plurality of user terminals with different addresses access the network through the access port. When the access mode is authorized access, one port of the access device corresponds to one user terminal. Therefore, it can be quickly and accurately detected, by identifying different address information, that the access mode of the terminal device is unauthorized access. When the address information is the same, there may be two cases. In a first case, the access mode of the terminal device connected to the access port is authorized access. In a second case, a plurality of user terminals masquerade as having same address information to perform data transmission. Further, when it is determined that the address information is the same, the operating system is further identified to perform unauthorized access detection, so as to ensure accuracy of the unauthorized access detection. The user terminal may also be referred to as a terminal device.

When the hub unauthorizedly accesses the network, because the hub cannot modify address information of a terminal device that accesses the network through the hub, a situation in which the hub unauthorizedly accesses the network can be easily and quickly identified by identifying address information on a same access port. In actual application, if the network allows the hub to unauthorizedly access the network, a detection manner of identifying only different operating systems may be selected; or if the network does not allow the hub to unauthorizedly access the network, a detection manner of identifying different address information first and then identifying different operating systems may be selected, to improve efficiency of identifying an unauthorized hub.

Manner 2: The data feature includes the flow behavior feature.

Optionally, a process of determining the access mode of the terminal device based on the data feature includes: obtaining a deviation distance between the flow behavior feature and a reference feature, where the reference feature is a flow behavior feature of data transmitted by a terminal device whose access mode is authorized access; and when the deviation distance is greater than a deviation threshold, determining that the access mode of the terminal device is unauthorized access. The deviation threshold may be set based on experience or flexibly adjusted based on an application scenario. This is not limited in this embodiment of this application.

A flow behavior feature of data transmitted by an authorized terminal device is different from a flow behavior feature of data transmitted by an unauthorized terminal device. For example, the terminal device whose access mode is authorized access corresponds to a single terminal, the terminal device whose access mode is unauthorized access corresponds to a plurality of terminals, and a flow behavior feature of data transmitted by a single terminal device is different from a flow behavior feature of data transmitted by a plurality of terminal devices. Therefore, a deviation is obtained by comparing the collected flow behavior feature of the data transmitted by the terminal device and the flow behavior feature of the data transmitted by the authorized terminal device, so that it can be quickly and accurately detected that the access mode of the terminal device is unauthorized access.

An example in which the flow behavior feature includes the transmission frequency and the sending interval is used. A transmission frequency and a sending interval of the authorized terminal device are used as a reference frequency and a reference interval, and a first deviation distance between the transmission frequency in the collected data feature and the reference frequency and a second deviation distance between the sending interval in the collected data feature and the reference interval are obtained. The deviation distance of the flow behavior features is determined based on the first deviation distance and the second deviation distance. Optionally, an average value of the first deviation distance and the second deviation distance is determined as the deviation distance of the flow behavior features, or a larger value of the first deviation distance and the second deviation distance is determined as the deviation distance of the flow behavior features. The deviation distance may be in a form of percentage. For example, when the collected sending interval is 1 second, and the reference interval is 0.8 seconds, the deviation distance may be calculated as (1-0.8)/0.8*100%=25%. If the deviation threshold is 20%, because the deviation distance 25% is greater than the deviation threshold 20%, it is determined that the access mode of the terminal device is unauthorized access.

Manner 3: The data feature includes at least one of the network feature or the device physical feature.

Optionally, a process of determining the access mode of the terminal device based on the data feature includes: identifying a type of the terminal device based on at least one of the network feature or the device physical feature; and when the type of the terminal device is the router or the hub, determining that the access mode of the terminal device is unauthorized access.

The router or the hub is a device configured to connect a plurality of terminals together. When the access mode is authorized access, the terminal device connected to the access device corresponds to one terminal. Therefore, it can be quickly and accurately detected, by identifying the router or the hub, that the access mode of the terminal device is unauthorized access. In addition, on the basis of being capable of detecting that the access mode of the terminal device is unauthorized access, it can be further determined whether an unauthorized access type is an unauthorized router or an unauthorized hub, so that a result of unauthorized access detection is more accurate, and the unauthorized access type can further provide help for subsequent implementation of blocking unauthorized access.

An example in which the network feature includes the LLDP fingerprint and the MAC OUI fingerprint is used. Identifying the type of the terminal device based on the network feature includes: matching the collected LLDP fingerprint and the collected MAC OUI fingerprint with those in a first database, where the first database includes a correspondence between a terminal type, and an LLDP fingerprint and a MAC OUI fingerprint; and determining the type of the terminal device based on a matching result. An example in which the device physical feature includes the transient signal amplitude of the data frame, the voltage, and the voltage difference is used. Identifying the type of the terminal device based on the device physical feature includes: matching a slope, a voltage, and a voltage difference that are of a transient signal amplitude of a data frame of collected data with those in a second database, where the second database includes a correspondence between a terminal type and a slope, a voltage, and a voltage difference that are of a transient signal amplitude of a data frame; and determining the type of the terminal device based on a matching result.

Therefore, in at least one of the foregoing manner 1 to manner 3, the access mode of the terminal device may be determined based on any one of the data features. For any one of the data features mentioned in the foregoing implementations, if it is determined, based on any one or more features, that the access mode of the terminal device is unauthorized access, the access mode of the terminal device is unauthorized access.

In embodiments of this application, the access mode may be determined based on any one or more features, and processes of determining the access mode based on any two features may be performed simultaneously or not performed simultaneously. If the processes are not performed simultaneously, the two processes of determining the access mode may be performed in any sequence. For example, determining of the access mode is first performed based on the packet feature, and determining of the access mode is then performed based on the flow behavior feature; or determining of the access mode is first performed based on the flow behavior feature, and determining of the access mode is then performed based on the packet feature. In addition, if the access mode is determined based on a plurality of features, mutual verification may be performed based on results of determining the access mode based on the plurality of features. If the access mode determined based on any collected feature is authorized access, it is determined that the access mode of the terminal device is authorized access.

When it is determined, according to the foregoing step 501 and step 502, that the access mode of the terminal device is unauthorized access, the unauthorized terminal device may be blocked, that is, the terminal device is blocked from transmitting data. Optionally, the access device sends a blocking instruction or a blocking signal, to block the terminal device from transmitting the data.

In a possible implementation, a manner of blocking the terminal device from transmitting the data includes but is not limited to: shutting down the access port of the terminal device, so that the access port no longer receives data; adding the address information of the terminal device to a blocklist, where the blocklist is used to block, from transmitting data, a terminal device corresponding to address information in the blocklist, so that the access device can no longer forward data including the address information; or disconnecting a user in an online state on the terminal device, so that the terminal device exits the network, in other words, the terminal device cannot send data to the access device. Therefore, three manners of blocking the terminal device from transmitting the data are provided, so that different blocking manners can be flexibly selected based on different scenarios.

The blocking manner of shutting down the access port of the terminal device may be referred to as port shutdown (shutdown). Adding the address information of the terminal device to the blocklist may be adding a MAC address of the terminal device to the blocklist. The blocking manner may be referred to as a MAC blackhole, so that when the terminal device corresponding to the MAC address accesses through another port of the access device, the terminal device is also blocked due to the blocklist. The blocking manner of disconnecting the user in the online state on the terminal device may be referred to as going offline after user authentication, and the offline user can access the network only after performing an online authentication operation again.

In embodiments of this application, the blocking manner may be determined based on the unauthorized access type of the terminal device. For example, if the terminal device is an unauthorized router, the blocking manner may be selected as the port shutdown; or if the terminal device shares a wireless network, the blocking manner may be going offline after user authentication. Selection of the blocking manner is merely an example for description, and a specific selection manner may be determined based on a user configuration.

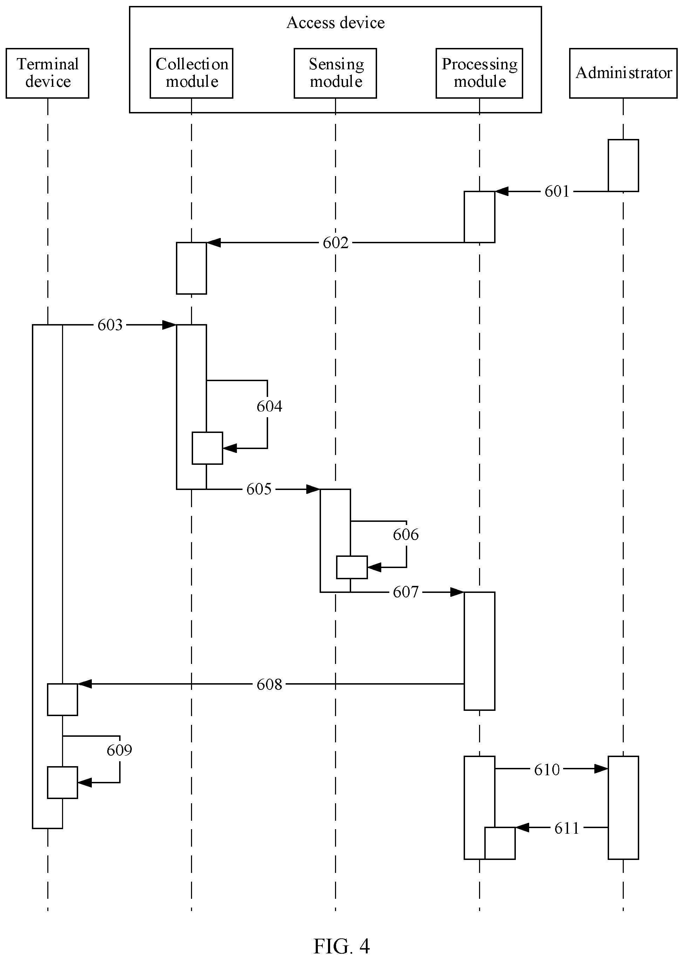

For ease of understanding, an embodiment of this application provides an access mode detection scenario. FIG. 4 includes an administrator, an access device, and a terminal device. The access device includes a collection module, a sensing module, and a processing module. The collection module, the sensing module, and the processing module are merely examples for description. A specific implementation may not be limited to the three modules, and may be flexibly adjusted based on a requirement.

As shown in FIG. 4: Step 601: The administrator configures an unauthorized access detection configuration command for the processing module of the access device. Step 602: The processing module controls the collection module to start to collect a data feature. Step 603: The terminal device sends data to the access device. Step 604: The collection module collects the data feature based on the data sent by the terminal device. Step 605: The collection module sends the data feature to the sensing module. Step 606: The sensing module determines, based on the data feature, whether an access mode of the terminal device is unauthorized access. Step 607: Send information about an unauthorized terminal device to the processing module. Step 608: Block data sent by the terminal device. Step 609: The terminal device cannot connect to a network. Step 610: The processing module sends alarm information to the administrator. Step 611: The administrator may view the information about the unauthorized terminal and a blocking result via the access device.

In conclusion, in embodiments of this application, because a data feature of data transmitted by the access device at an access layer is collected, when the data arrives at the access layer, access mode detection can be performed. In comparison with a centralized unauthorized access prevention method in a related technology, the method can compensate for detection of data that arrives at the access layer but does not arrive at a core layer, so that the access mode detection can be performed in a more timely and comprehensive manner. In addition, there are a large quantity of types of data features that can be collected at the access layer, so that a probability of detecting an unauthorized terminal device is higher, and accuracy of the access mode detection is improved. According to the method provided in embodiments of this application, a type of the terminal device can be identified, so that a result of unauthorized access detection is more accurate. The unauthorized access type can further provide help for subsequent implementation of blocking unauthorized access. The data feature provided in embodiments of this application is comprehensive, and mutual verification may be performed between access modes determined by different data features, to improve accuracy of access mode identification. In addition, embodiments of this application provide two data feature collection manners, so that data feature collection is flexible. Collecting a data feature with a flow can improve data feature collection efficiency, and collecting copied data can avoid impact on data transmission.

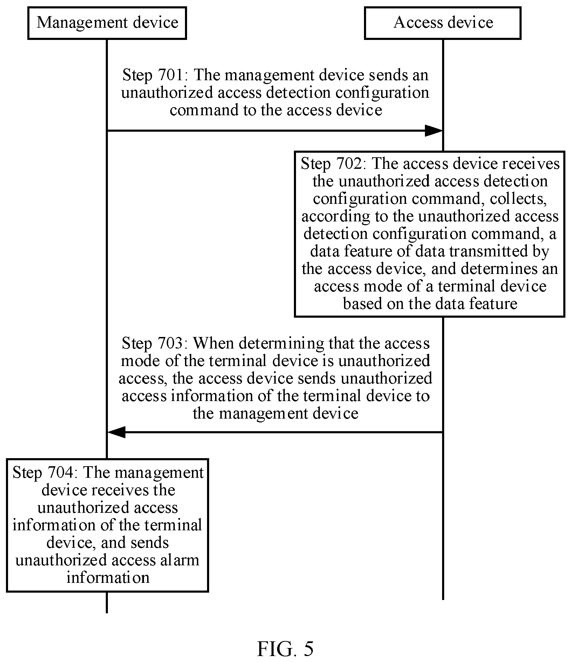

An example in which an access device and a management device interact to perform the method is used. As shown in FIG. 5, the method provided in this embodiment of this application includes but is not limited to the following step 701 to step 704. The access device may be the access-layer switch 104 shown in FIG. 1, the management device is connected to the access device, and the management device is configured to interact with an administrator.

Step 701: The management device sends an unauthorized access detection configuration command to the access device.

The management device may be a central console or a server used by a network administrator to configure and control a network device, and the unauthorized access detection configuration command may be flexibly configured by the administrator based on a requirement.

Step 702: The access device receives the unauthorized access detection configuration command, collects, according to the unauthorized access detection configuration command, a data feature of data transmitted by the access device, and determines an access mode of a terminal device based on the data feature.

The access device triggers, according to the unauthorized access detection configuration command delivered by the management device, collection of the data feature of the data transmitted by the access device, and determines the access mode of the terminal device based on the data feature. In this manner, the data feature collection can be flexibly triggered according to the unauthorized access detection configuration command, that is, unauthorized access detection is triggered, and different unauthorized access detection configuration commands can be set based on different user requirements, so that implementation of the unauthorized access detection better meets the user requirements.

For an implementation of step 702, refer to related descriptions of step 501 and step 502. Details are not described herein again.

Step 703: When determining that the access mode of the terminal device is unauthorized access, the access device sends unauthorized access information of the terminal device to the management device.

The unauthorized access information can indicate that the access mode of the terminal device is unauthorized access. Optionally, the unauthorized access information may include at least one of a MAC address, an IP address, an access port, access time, an unauthorized access type, or an unauthorized access determining reason.

Step 704: The management device receives the unauthorized access information of the terminal device, and sends unauthorized access alarm information.

Embodiments of this application do not limit a manner of sending the unauthorized access alarm information. Optionally, the management device generates an alarm record, where the record records related information about unauthorized access, such as occurrence time, an occurrence location, and an identifier of an involved terminal device. The management device sends the unauthorized access alarm information to the administrator or visually presents the information on the management device, so that the administrator can take a measure in time. For example, the information may be sent by using an email, a message, an instant message, a specific alarm system, or the like. In this way, the administrator that receives the unauthorized access alarm information can take a corresponding measure based on content in the information, for example, isolate an unauthorized device, investigate a network status, and contact an administrator, to ensure normal running and security of the network.

In a possible implementation, after receiving the unauthorized access information of the terminal device, the management device further blocks the terminal device from transmitting data. A manner of blocking the terminal device from transmitting data includes but is not limited to: sending a shutdown instruction to the access device, where the shutdown instruction is used by the access device to shut down the access port of the terminal device; sending a blocklist to the access device, where the blocklist includes address information of the terminal device, and the blocklist is used by the access device to block, from transmitting data, a terminal device corresponding to address information in the blocklist; or sending an offline instruction to the access device, where the offline instruction is used by the access device to disconnect a user in an online state on the terminal device. In this manner, three blocking manners are provided, and proper blocking manners can be flexibly selected based on different scenarios. In addition, the management device continuously monitors the network status to ensure that unauthorized access is effectively controlled. When blocking the data transmitted by the terminal device, the management device sends a notification to notify a user that an offline measure has been taken, and visually presents the blocking manner and the involved terminal device.

In a possible implementation, after the unauthorized access information of the terminal device is received, the unauthorized access information of the terminal device is visually presented. An example in which the unauthorized access information includes the MAC address, the IP address, the access port, the access time, the unauthorized access type, and the unauthorized access determining reason is used.

Each terminal device has a unique MAC address that identifies an identity of the terminal device. The IP address is a unique identifier of the terminal device on the network, and is used to locate and manage the terminal device. The access port may determine a specific port used by the terminal device to perform unauthorized access. Recording the access time of the terminal device can be used to evaluate a time period of unauthorized access of the terminal device, and take a corresponding measure for the specific time period. A specific blocking measure can be taken based on the unauthorized access type. The unauthorized access determining reason indicates a reason or a basis for the access device to determine that the terminal device is an unauthorized terminal device. The unauthorized access determining reason may help the user understand a nature and severity of unauthorized access.

A manner of visually presenting the unauthorized access information may include a chart, a table, a dashboard, or another visualization tool. The visualization tool may present the unauthorized access information to the user in an intuitive and easy-to-understand manner, and help the user quickly learn of an overview and details of an unauthorized terminal device. Visualized presentation of the unauthorized access information helps the user quickly understand impact and distribution of unauthorized access, to better formulate and implement a corresponding measure, for example, isolate an unauthorized terminal device, send an alarm, notify related personnel, or take another appropriate action. The visualized presentation can further help the user perform long-term data analysis and trend prediction to prevent and cope with a future terminal device whose access mode is unauthorized access.

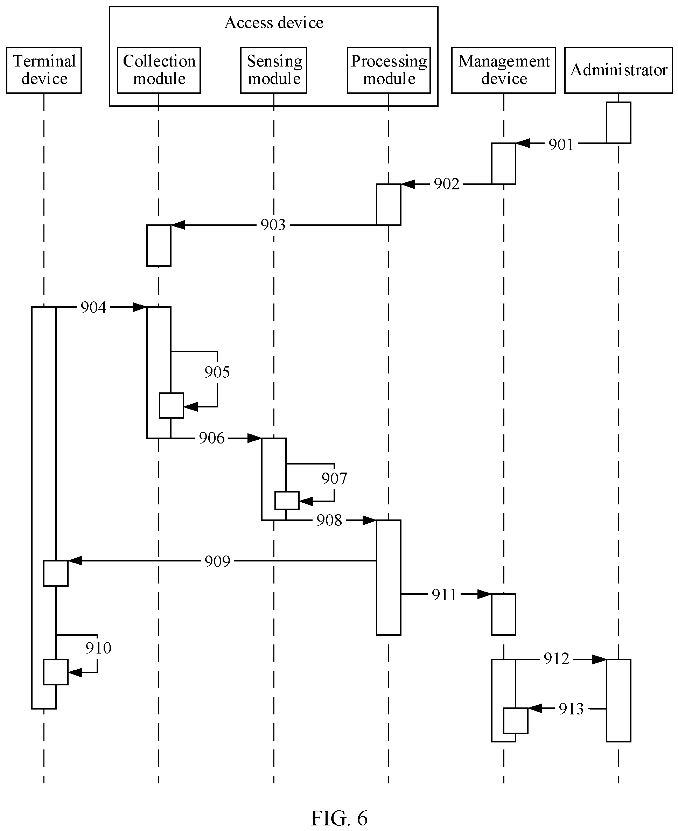

For ease of understanding, an embodiment of this application provides another access mode detection scenario. FIG. 6 includes an administrator, an access device, a management device, and a terminal device. The access device includes a collection module, a sensing module, and a processing module. The collection module, the sensing module, and the processing module are merely examples for description. A specific implementation may not be limited to the three modules, and may be flexibly adjusted based on a requirement.

As shown in FIG. 6: Step 901: The administrator configures an unauthorized access detection configuration command on a visual interface of the management device. Step 902: The management device sends the unauthorized access detection configuration command to the processing module of the access device. Step 903: The processing module controls the collection module to start to collect a data feature. Step 904: The terminal device sends data to the access device. Step 905: The collection module collects the data feature based on the data sent by the terminal device. Step 906: The collection module sends the data feature to the sensing module. Step 907: The sensing module determines, based on the data feature, whether an access mode of the terminal device is unauthorized access. Step 908: Send unauthorized access information of an unauthorized terminal device to the processing module. Step 909: The processing module blocks the terminal device from transmitting data. Step 910: The terminal device cannot connect to a network. Step 911: The processing module sends the unauthorized access information and a blocking result to the management device. Step 912: The management device sends alarm information to the administrator. Step 913: The administrator may view the unauthorized access information and the blocking result on the visual interface of the management device.

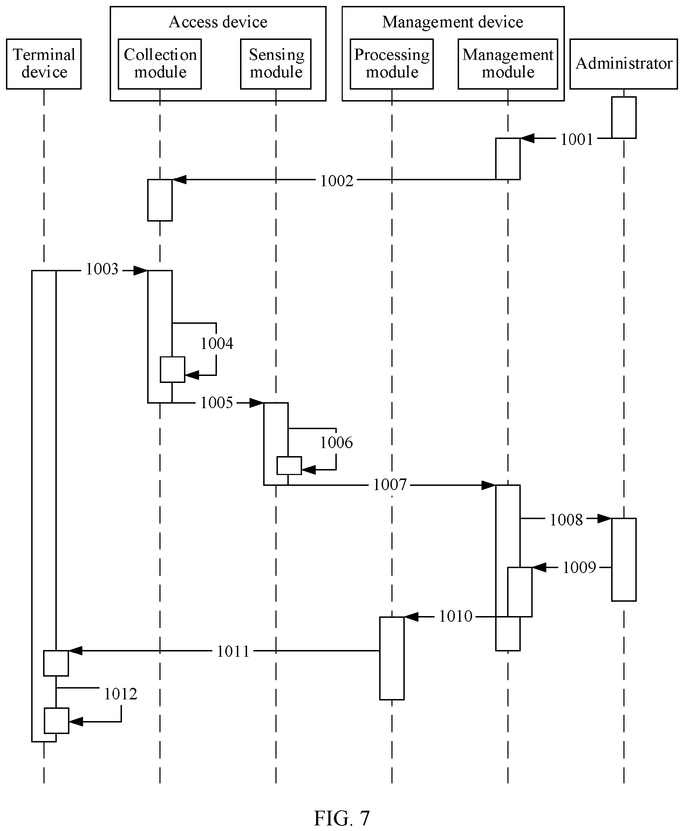

The sensing module or the processing module provided in this embodiment of this application may alternatively be configured in the management device, to reduce a workload of the access device. For example, FIG. 7 provides still another access mode detection scenario. FIG. 7 includes an administrator, an access device, a management device, and a terminal device. The access device includes a collection module and a sensing module, and the management device includes a management module and a processing module. The collection module, the sensing module, the processing module, and the management module are merely examples for description. A specific implementation may not be limited to the four modules, and may be flexibly adjusted based on a requirement.

As shown in FIG. 7: Step 1001: The administrator configures an unauthorized access detection configuration command on a visual interface of the management device. Step 1002: The management module sends the unauthorized access detection configuration command to the collection module of the access device. Step 1003: The terminal device sends data to the access device. Step 1004: The collection module collects a data feature based on the data sent by the terminal device. Step 1005: The collection module sends the data feature to the sensing module. Step 1006: The sensing module determines, based on the data feature, whether an access mode of the terminal device is unauthorized access. Step 1007: Send unauthorized access information of an unauthorized terminal device to the management module. Step 1008: The management module sends alarm information to the administrator. Step 1009: The administrator views the unauthorized access information on the visual interface of the management device. Step 1010: The management module sends blocking information to the processing module. Step 1011: The processing module blocks, based on the blocking information, the data sent by the terminal device. Step 1012: The terminal device cannot connect to a network.

In conclusion, in this embodiment of this application, the access device is connected to the management device, and the management device implements visualized management of the unauthorized terminal device.

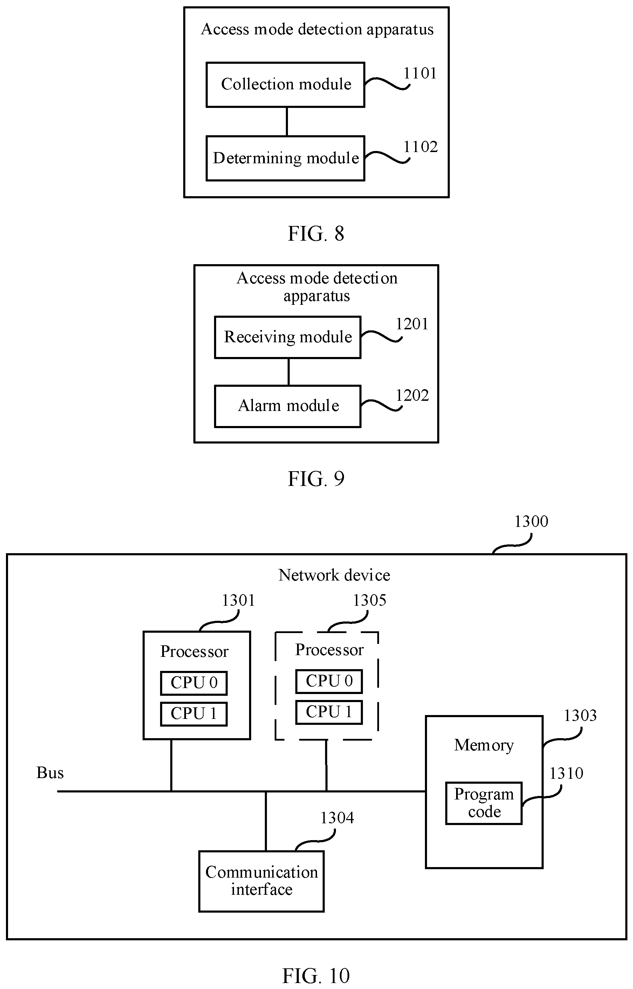

The foregoing describes the access mode detection method provided in embodiments of this application. Corresponding to the foregoing method, an embodiment of this application further provides an access mode detection apparatus. The apparatus is configured to perform, via modules shown in FIG. 8, the access mode detection method performed by the access device in the foregoing descriptions, for example, the method shown in FIG. 3. As shown in FIG. 8, the access mode detection apparatus provided in this embodiment of this application includes the following modules:
a collection module 1101, configured to collect a data feature of data transmitted by an access device, where the data feature indicates a feature of a terminal device that transmits the data, the terminal device is connected to the access device, and the data feature includes at least one of a packet feature, a flow behavior feature, a network feature, or a device physical feature; and
a determining module 1102, configured to determine an access mode of the terminal device based on the data feature.

In an example implementation, the data feature includes a plurality of packet features; and the determining module 1102 is configured to: identify an operating system under an access port of the terminal device based on the plurality of packet features; and when operating systems under the access port are different, determine that the access mode of the terminal device is unauthorized access.

In an example implementation, the determining module 1102 is configured to: identify address information on the access port of the terminal device based on the plurality of packet features; and when the address information on the access port is the same, identify the operating system under the access port of the terminal device based on the plurality of packet features; and
the determining module 1102 is further configured to: when the address information on the access port is different, determine that the access mode of the terminal device is unauthorized access.

In an example implementation, the data feature includes the flow behavior feature; and the determining module 1102 is configured to: obtain a deviation distance between the flow behavior feature and a reference feature, where the reference feature is a flow behavior feature of data transmitted by a terminal device whose access mode is authorized access; and when the deviation distance is greater than a deviation threshold, determine that the access mode of the terminal device is unauthorized access.

In an example implementation, the data feature includes at least one of the network feature or the device physical feature; and the determining module 1102 is configured to: identify a type of the terminal device based on at least one of the network feature or the device physical feature; and when the type of the terminal device is a router or a hub, determine that the access mode of the terminal device is unauthorized access.

In an example implementation, the apparatus further includes a blocking module, configured to: when the access mode of the terminal device is unauthorized access, block the terminal device from transmitting data. Alternatively, the apparatus further includes a sending module, configured to: when the access mode of the terminal device is unauthorized access, send unauthorized access information of the terminal device to a management device, where the unauthorized access information is used by the management device to block the terminal device from transmitting data.

In an example implementation, the blocking module is configured to shut down the access port of the terminal device; add the address information of the terminal device to a blocklist, where the blocklist is used to block, from transmitting data, a terminal device corresponding to address information in the blocklist; or disconnect a user in an online state on the terminal device.

In an example implementation, the data transmitted by the access device is data that flows from a terminal side to a network side.

In an example implementation, the apparatus further includes a receiving module, configured to receive an unauthorized access detection configuration command sent by the management device. In this case, the collection module 1101 is configured to collect, according to the unauthorized access detection configuration command, the data feature of the data transmitted by the access device.

In an example implementation, the apparatus further includes a copying module, configured to copy the data transmitted by the access device, to obtain copied data. In this case, the collection module 1101 is configured to collect a data feature of the copied data.

In an example implementation, the access device is a first-hop forwarding device for data sent by the terminal device.

It should be understood that, when the apparatus shown in FIG. 8 implements functions of the apparatus, beneficial effects of the apparatus are the same as beneficial effects of the method shown in FIG. 3. When the apparatus shown in FIG. 8 implements the functions of the apparatus, division into the foregoing functional modules is merely used as an example for description. In actual application, the foregoing functions may be allocated and implemented by different functional modules based on requirements, that is, an internal structure of a device is divided into different functional modules, to implement all or some of the foregoing described functions. In addition, the apparatus provided in the foregoing embodiment and the method embodiment belong to the same concept. For details of a specific implementation process, refer to the method embodiment. Details are not described herein again.

An embodiment of this application further provides an access mode detection apparatus. The apparatus is configured to perform, via modules shown in FIG. 9, the access mode detection method performed by the access device in the foregoing descriptions, for example, the method shown in FIG. 5. As shown in FIG. 9, the access mode detection apparatus provided in this embodiment of this application includes the following modules:
a receiving module 1201, configured to receive unauthorized access information that is of a terminal device and that is sent by an access device, where the unauthorized access information indicates that an access mode of the terminal device is unauthorized access; and
an alarm module 1202, configured to send unauthorized access alarm information.

In an example implementation, the apparatus further includes a blocking module, configured to block the terminal device from transmitting data.

In an example implementation, the blocking module is configured to: send a shutdown instruction to the access device, where the shutdown instruction is used by the access device to shut down an access port of the terminal device; send a blocklist to the access device, where the blocklist includes address information of the terminal device, and the blocklist is used by the access device to block, from transmitting data, a terminal device corresponding to address information in the blocklist; or send an offline instruction to the access device, where the offline instruction is used by the access device to disconnect a user in an online state on the terminal device.

In an example implementation, the apparatus further includes a visual presentation module, configured to visually present the unauthorized access information of the terminal device, where the unauthorized access information includes at least one of a MAC address, an IP address, the access port, access time, an unauthorized access type, or an unauthorized access determining reason.

In an example implementation, the apparatus further includes a sending module, configured to send an unauthorized access detection configuration command to the access device, where the unauthorized access detection configuration command is used by the access device to collect a data feature of data transmitted by the access device, and determine the access mode of the terminal device based on the data feature.

It should be understood that, when the apparatus shown in FIG. 9 implements functions of the apparatus, beneficial effects of the apparatus are the same as beneficial effects of the method shown in FIG. 5. When the apparatus shown in FIG. 9 implements the functions of the apparatus, division into the foregoing functional modules is merely used as an example for description. In actual application, the foregoing functions may be allocated and implemented by different functional modules based on requirements, that is, an internal structure of a device is divided into different functional modules, to implement all or some of the foregoing described functions. In addition, the apparatus provided in the foregoing embodiment and the method embodiment belong to the same concept. For details of a specific implementation process, refer to the method embodiment. Details are not described herein again.

An embodiment of this application provides an access mode detection device. The device includes a memory and a processor. The memory stores at least one computer instruction, and the at least one computer instruction is loaded and executed by the processor, to enable the access mode detection device to implement the access mode detection method shown in FIG. 3 or FIG. 5.

FIG. 10 is a diagram of a structure of a network device 1300 according to this application. The network device 1300 shown in FIG. 10 is configured to perform operations in the access mode detection method shown in FIG. 4. The network device 1300 is, for example, a switch. The network device 1300 may be implemented by using a general bus architecture.

As shown in FIG. 10, the network device 1300 includes at least one processor 1301, a memory 1303, and at least one communication interface 1304.

The processor 1301 is, for example, a general-purpose central processing unit (central processing unit, CPU), a digital signal processor (digital signal processor, DSP), a network processor (network processor, NP), a graphics processing unit (graphics processing unit, GPU), a neural-network processing unit (neural-network processing unit, NPU), a data processing unit (data processing unit, DPU), a microprocessor, or one or more integrated circuits configured to implement the solutions of this application. For example, the processor 1301 includes an application-specific integrated circuit (application-specific integrated circuit, ASIC), a programmable logic device (programmable logic device, PLD) or another programmable logic device, a transistor logic device, a hardware component, or any combination thereof. The PLD is, for example, a complex programmable logic device (complex programmable logic device, CPLD), a field-programmable gate array (field-programmable gate array, FPGA), a generic array logic (generic array logic, GAL), or any combination thereof. The processor may implement or execute various logical blocks, modules, and circuits described with reference to the content disclosed in embodiments of the present invention. Alternatively, the processor may be a combination implementing a computing function, for example, a combination including one or more microprocessors, or a combination of the DSP and the microprocessor.

Optionally, the network device 1300 further includes a bus. The bus is configured to transfer information between components of the network device 1300. The bus may be a peripheral component interconnect (peripheral component interconnect, PCI for short) bus, an extended industry standard architecture (extended industry standard architecture, EISA for short) bus, or the like. Buses may be classified into an address bus, a data bus, a control bus, and the like. For ease of representation, the bus is represented by using only one line in FIG. 10. However, it does not mean that there is only one bus or only one type of bus.

The memory 1303 is, for example, a read-only memory (read-only memory, ROM) or another type of static storage device that can store static information and instructions, for another example, a random access memory (random access memory, RAM) or another type of dynamic storage device that can store information and instructions, for another example, an electrically erasable programmable read-only memory (electrically erasable programmable read-only Memory, EEPROM), a compact disc read-only memory (compact disc read-only memory, CD-ROM) or another compact disc storage, an optical disk storage (including a compact disc, a laser disc, an optical disc, a digital versatile disc, a Blu-ray disc, or the like), a magnetic disk storage medium or another magnetic storage device, or any other medium that can be used to carry or store expected program code in a form of instructions or a data structure and that can be accessed by a computer, but is not limited thereto. For example, the memory 1303 exists independently, and is connected to the processor 1301 through the bus. Alternatively, the memory 1303 may be integrated with the processor 1301.

The communication interface 1304 is any apparatus like a transceiver, and is configured to communicate with another device or a communication network. The communication network may be an Ethernet, a radio access network (radio access network, RAN), a wireless local area network (wireless local area network, WLAN), or the like. The communication interface 1304 may include a wired communication interface, and may further include a wireless communication interface. Specifically, the communication interface 1304 may be an Ethernet (Ethernet) interface, a fast Ethernet (fast ethernet, FE) interface, a gigabit Ethernet (gigabit ethernet, GE) interface, an asynchronous transfer mode (asynchronous transfer mode, ATM) interface, a wireless local area network (wireless local area network, WLAN) interface, a cellular network communication interface, or a combination thereof. The Ethernet interface may be an optical interface, an electrical interface, or a combination thereof. In this embodiment of this application, the communication interface 1304 may be used by the network device 1300 to communicate with another device.

During specific implementation, in an embodiment, the processor 1301 may include one or more CPUs, for example, a CPU 0 and a CPU 1 in FIG. 10. Each of the processors may be a single-core processor (single-core CPU), or may be a multi-core processor (multi-core CPU). The processor herein may be one or more devices, circuits, and/or processing cores for processing data (for example, computer program instructions).

During specific implementation, in an embodiment, the network device 1300 may include a plurality of processors, for example, the processor 1301 and a processor 1305 shown in FIG. 10. Each of the processors may be a single-core processor (single-core CPU), or may be a multi-core processor (multi-core CPU). The processor herein may be one or more devices, circuits, and/or processing cores for processing data (for example, computer program instructions).

During specific implementation, in an embodiment, the network device 1300 may further include an output device and an input device. The output device communicates with the processor 1301, and may display information in a plurality of manners. For example, the output device may be a liquid crystal display (liquid crystal display, LCD), a light-emitting diode (light-emitting diode, LED) display device, a cathode ray tube (cathode ray tube, CRT) display device, or a projector (projector). The input device communicates with the processor 1301, and may receive an input of a user in a plurality of manners. For example, the input device may be a mouse, a keyboard, a touchscreen device, a sensor device, or the like.

In some embodiments, the memory 1303 is configured to store program code 1310 for executing the solutions of this application, and the processor 1301 may execute the program code 1310 stored in the memory 1303. In other words, the network device 1300 may implement, by using the processor 1301 and the program code 1310 in the memory 1303, the access mode detection method provided in the method embodiment. The program code 1310 may include one or more software modules. Optionally, the processor 1301 may also store program code or instructions for executing the solutions of this application.

In a specific embodiment, the network device 1300 in this embodiment of this application may correspond to the access device in the foregoing method embodiment, and the processor 1301 in the network device 1300 reads instructions in the memory 1303, so that the network device 1300 shown in FIG. 10 can perform all or some operations performed by the access device.

For brevity, another optional implementation is not described herein again.

In a specific embodiment, the network device 1300 in this embodiment of this application may correspond to the management device in the foregoing method embodiment, and the processor 1301 in the network device 1300 reads instructions in the memory 1303, so that the network device 1300 shown in FIG. 10 can perform all or some operations performed by the management device.

For brevity, another optional implementation is not described herein again.

The network device 1300 may further correspond to the access mode detection apparatus shown in FIG. 8 or FIG. 9, and each functional module in the access mode detection apparatus is implemented by software of the network device 1300. In other words, the functional modules included in the access mode detection apparatus are generated after the processor 1301 of the network device 1300 reads the program code 1310 stored in the memory 1303.

Steps of the access mode detection method shown in FIG. 3 or FIG. 5 are completed through an integrated logic circuit of hardware in the processor of the network device 1300 or by using instructions in a form of software. The steps of the method disclosed with reference to embodiments of this application may be directly performed by a hardware processor, or may be performed by a combination of hardware in the processor and a software module. The software module may be located in a mature storage medium in the art, for example, a random access memory, a flash memory, a read-only memory, a programmable read-only memory, an electrically erasable programmable memory, or a register. The storage medium is located in the memory, and the processor reads information in the memory and completes the steps in the foregoing methods in combination with the hardware in the processor. To avoid repetition, details are not described herein again.

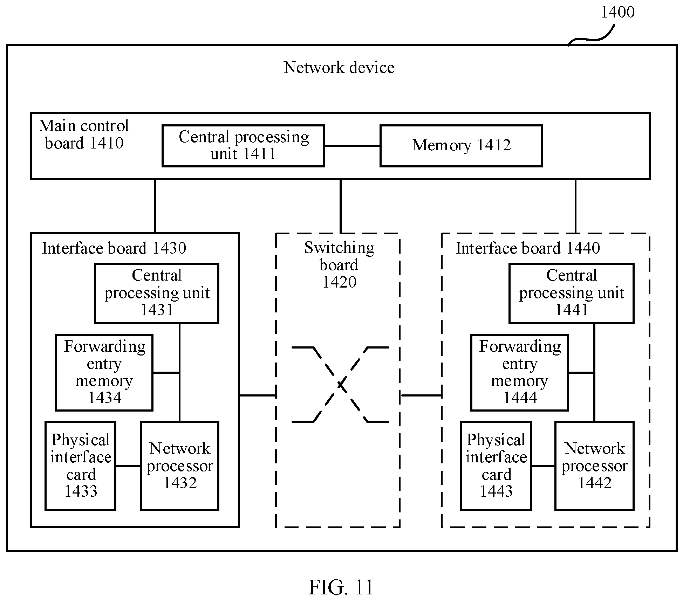

FIG. 11 is a diagram of a structure of a network device 1400 according to another example embodiment of this application. The network device 1400 shown in FIG. 11 is configured to perform all or some of the operations in the access mode detection method shown in FIG. 3 or FIG. 5. The network device 1400 is, for example, a switch or a router. The network device 1400 may be implemented by using a general bus architecture.

As shown in FIG. 11, the network device 1400 includes a main control board 1410 and an interface board 1430.

The main control board is also referred to as a main processing unit (main processing unit, MPU) or a route processor card (route processor card). The main control board 1410 is configured to control and manage components in the network device 1400, including functions of route calculation, device management, device maintenance, and protocol processing. The main control board 1410 includes a central processing unit 1411, and a memory 1412.

The interface board 1430 is also referred to as a line interface unit (line processing unit, LPU), a line card (line card), or a service board. The interface board 1430 is configured to provide various service interfaces and forward a data packet. The service interfaces include but are not limited to an Ethernet interface and a POS (Packet over SONET/SDH) interface. The Ethernet interface is, for example, a flexible Ethernet service interface (flexible ethernet clients, FlexE Clients). The interface board 1430 includes a central processing unit 1431, a network processor 1432, a forwarding entry memory 1434, and a physical interface card (physical interface card, PIC) 1433.

The central processing unit 1431 on the interface board 1430 is configured to: control and manage the interface board 1430, and communicate with the central processing unit 1411 on the main control board 1410.

The network processor 1432 is configured to implement access mode detection. A form of the network processor 1432 may be a forwarding chip. The forwarding chip may be a network processor (network processor, NP). In some embodiments, the forwarding chip may be implemented by an application-specific integrated circuit (application-specific integrated circuit, ASIC) or a field-programmable gate array (field-programmable gate array, FPGA). Specifically, the network processor 1432 is configured to forward a received packet based on a forwarding table stored in the forwarding entry memory 1434. If a destination address of the packet is an address of the network device 1400, the packet is sent to a CPU (for example, the central processing unit 1431) for processing. If a destination address of the packet is not an address of the network device 1400, the forwarding table is searched, based on the destination address, for a next hop and an outbound interface that correspond to the destination address, and the packet is forwarded to the outbound interface corresponding to the destination address. Processing an uplink packet may include: processing an inbound interface of the packet and forwarding table lookup. Processing a downlink packet may include: forwarding table lookup, and the like. In some embodiments, the central processing unit may also perform a function of the forwarding chip, for example, implement software forwarding based on a general-purpose CPU, so that no forwarding chip is needed in the interface board.

The physical interface card 1433 is configured to implement a physical layer interconnection function. Original traffic enters the interface board 1430 from the physical interface card 1433, and a processed packet is sent out from the physical interface card 1433. The physical interface card 1433, also referred to as a subcard, may be installed on the interface board 1430, and is responsible for converting an optical/electrical signal into a packet, performing validity check on the packet, and forwarding the packet to the network processor 1432 for processing. In some embodiments, the central processing unit 1431 may also perform a function of the network processor 1432, for example, implement software forwarding based on a general-purpose CPU, so that the network processor 1432 is not needed in the physical interface card 1433.

Optionally, the network device 1400 includes a plurality of interface boards. For example, the network device 1400 further includes an interface board 1440. The interface board 1440 includes a central processing unit 1441, a network processor 1442, a forwarding entry memory 1444, and a physical interface card 1443. Functions and implementations of components in the interface board 1440 are the same as or similar to those of the interface board 1430. Details are not described herein again.

Optionally, the network device 1400 further includes a switching board 1420. The switching board 1420 may also be referred to as a switch fabric unit (switch fabric unit, SFU). When the network device 1400 has a plurality of interface boards, the switching board 1420 is configured to perform data exchange between the interface boards. For example, the interface board 1430 and the interface board 1440 may communicate with each other through the switching board 1420.

The main control board 1410 is coupled to the interface board. For example, the main control board 1410, the interface board 1430, the interface board 1440, and the switching board 1420 are connected to a system backplane through a system bus to implement interworking. In a possible implementation, an inter-process communication (inter-process communication, IPC) protocol channel is established between the main control board 1410 and the interface board 1430, and between the main control board 1410 and the interface board 1440, and communication between the main control board 1410 and the interface board 1430 and between the main control board 1410 and the interface board 1440 is performed through the IPC channel.

Logically, the network device 1400 includes a control plane and a forwarding plane. The control plane includes the main control board 1410 and the central processing unit 1411. The forwarding plane includes components that perform forwarding, such as the forwarding entry memory 1434, the physical interface card 1433, and the network processor 1432. The control plane performs functions such as a function of a router, generating a forwarding table, processing signaling and a protocol packet, and configuring and maintaining status of a network device. The control plane delivers the generated forwarding table to the forwarding plane. On the forwarding plane, based on the forwarding table delivered from the control plane, the network processor 1432 looks up the table, and forwards a packet received by the physical interface card 1433. The forwarding table delivered by the control plane may be stored in the forwarding entry memory 1434. In some embodiments, the control plane and the forwarding plane may be completely separated, and are not on a same network device.

It should be noted that there may be one or more main control boards. When there are a plurality of main control boards, the main control boards may include an active main control board and a standby main control board. There may be one or more interface boards. A network device with a stronger data processing capability provides a larger quantity of interface boards. There may also be one or more physical interface cards on the interface board. There may be no switching board or one or more switching boards. When there are a plurality of switching boards, load balancing and redundancy backup may be implemented together. In a centralized forwarding architecture, the network device may not need a switching board, and the interface board provides a function of processing service data of an entire system. In a distributed forwarding architecture, the network device may have at least one switching board, and data exchange between a plurality of interface boards is implemented by using the switching board, to provide a large-capacity data exchange and processing capability. Therefore, a data access and processing capability of the network device in the distributed architecture is greater than that of the network device in the centralized architecture. Optionally, the form of the network device may alternatively be a single board. In other words, there is no switching board, and functions of the interface board and the main control board are integrated into the board. In this case, the central processing unit on the interface board and the central processing unit on the main control board may be combined into one central processing unit on the board. The central processing unit on the board performs functions of the two central processing units existing after the two central processing units are combined. The network device in this form has low data exchange and processing capabilities (for example, a network device such as a low-end switch or router). A specific architecture that is to be used depends on a specific networking deployment scenario. This is not limited herein.

In a specific embodiment, the network device 1400 corresponds to the access mode detection apparatus shown in FIG. 8 or FIG. 9.

It should be understood that the processor may be a CPU, or may be another general-purpose processor, a digital signal processor (digital signal processor, DSP), an application-specific integrated circuit (application-specific integrated circuit, ASIC), a field-programmable gate array (field-programmable gate array, FPGA) or another programmable logic device, a discrete gate or a transistor logic device, a discrete hardware component, or the like. The general-purpose processor may be a microprocessor, any conventional processor, or the like. It should be noted that the processor may be a processor that supports an advanced reduced instruction set computer machines (advanced RISC machines, ARM) architecture.

Further, in an optional embodiment, the memory may include a read-only memory and a random access memory, and provide instructions and data for the processor. The memory may further include a non-volatile random access memory. For example, the memory may further store information of a device type.

The memory may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example and not limitative descriptions, many forms of RAMs are available, for example, a static random access memory (static RAM, SRAM), a dynamic random access memory (dynamic random access memory, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

An embodiment of this application further provides an access mode detection system. The system includes an access device and a management device. The access device is connected to the management device. The access device is configured to perform operations performed by the access device in the access mode detection method shown in FIG. 3 or FIG. 5. The management device is configured to perform operations performed by the management device in the access mode detection method shown in FIG. 5.

An embodiment of this application further provides a computer-readable storage medium. The storage medium stores at least one instruction, and the instruction is loaded and executed by a processor, to enable a computer to implement the access mode detection method shown in FIG. 3 or FIG. 5.

An embodiment of this application further provides a computer program (product). When the computer program is executed by a computer, a processor or the computer may be enabled to perform the access mode detection method shown in FIG. 3 or FIG. 5.

An embodiment of this application further provides a chip, including a processor, configured to: invoke, from a memory, instructions stored in the memory, and run the instructions, to enable a computer in which the chip is installed to perform the access mode detection method shown in FIG. 3 or FIG. 5.

An embodiment of this application further provides another chip, including an input interface, an output interface, a processor, and a memory. The input interface, the output interface, the processor, and the memory are connected through an internal connection path. The processor is configured to execute code in the memory. When the code is executed, a computer in which the chip is installed performs the access mode detection method shown in FIG. 3 or FIG. 5.

All or some of the foregoing embodiments may be implemented by software, hardware, firmware, or any combination thereof. When the software is used for the implementation, all or a part of the embodiments may be implemented in a form of a computer program product. The computer program product includes one or more computer instructions. When the computer program instructions are loaded and executed on a computer, the procedure or functions according to this application are completely or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, including one or more usable media. The usable medium may be a magnetic medium (for example, a floppy disk, a hard disk drive, or a magnetic tape), an optical medium (for example, a DVD), a semiconductor medium (for example, a solid state disk (solid state disk)), or the like.

A person of ordinary skill in the art may be aware that, method steps and modules described with reference to embodiments disclosed in this specification can be implemented by software, hardware, firmware, or any combination thereof. To clearly describe interchangeability between the hardware and the software, steps and compositions of embodiments have been generally described in terms of functions in the foregoing descriptions. Whether the functions are performed by hardware or software depends on particular applications and design constraint conditions of the technical solutions. A person of ordinary skill in the art may use different methods to implement the described functions for each particular application, but it should not be considered that the implementation goes beyond the scope of this application.

A person of ordinary skill in the art may understand that all or some of the steps of embodiments may be implemented by hardware or a program instructing related hardware. The program may be stored in a computer-readable storage medium. The storage medium may be a read-only memory, a magnetic disk, an optical disc, or the like.

When the software is used for the implementation, all or a part of the embodiments may be implemented in a form of a computer program product. The computer program product includes one or more computer program instructions. In an example, the method according to embodiments of this application may be described in the context of machine-executable instructions. For example, the machine-executable instructions are included in a program module that is in a component for execution on a real or virtual processor of a target. Generally, the program module includes a routine, a program, a library, an object, a class, a component, a data structure, and the like, and executes a specific task or implements a specific abstract data structure. In various embodiments, the functions of the program modules may be combined or split between the described program modules. The machine-executable instructions used for the program module may be executed locally or in a distributed device. In the distributed device, the program module may be located in both a local storage medium and a remote storage medium.

Computer program code used to implement the method in embodiments of this application may be written in one or more programming languages. The computer program code may be provided for a processor of a general-purpose computer, a dedicated computer, or another programmable data processing apparatus, so that when the program code is executed by the computer or the another programmable data processing apparatus, functions/operations specified in the flowcharts and/or block diagrams are implemented. The program code may be executed entirely on a computer, partly on a computer, as a standalone software package, partly on a computer and partly on a remote computer, or entirely on a remote computer or a server.

In the context of embodiments of this application, computer program code or related data may be carried in any appropriate carrier, so that the device, the apparatus, or the processor can perform various types of processing and operations described above. Examples of the carrier include a signal, a computer-readable medium, and the like.

Examples of the signal may include an electrical signal, an optical signal, a radio signal, a voice signal, or other forms of propagated signals, such as a carrier wave and an infrared signal.

The machine-readable medium may be any tangible medium that includes or stores programs for or with respect to an instruction execution system, apparatus, or device. The machine-readable medium may be a machine-readable signal medium or a machine-readable storage medium. The machine-readable medium may include but is not limited to an electronic, magnetic, optical, electromagnetic, infrared, or semiconductor system, apparatus, or device, or any appropriate combination thereof. A more detailed example of the machine-readable storage medium includes an electrical connection with one or more wires, a portable computer disk, a hard disk, a random access memory (RAM), a read-only memory (ROM), an erasable programmable read-only memory (EPROM or flash memory), an optical storage device, a magnetic storage device, or any appropriate combination thereof.

It may be clearly understood by a person skilled in the art that, for the purpose of convenient and brief description, for detailed working processes of the foregoing described system, device, and module, refer to corresponding processes in the foregoing method embodiments. Details are not described herein again.

In the several embodiments provided in this application, it should be understood that the disclosed system, device, and method may be implemented in other manners. For example, the described device embodiment is merely an example. For example, division into the modules is merely logical function division and there may be other division in an actual implementation. For example, a plurality of modules or components may be combined or may be integrated to another system, or some features may be ignored or not executed. In addition, the displayed or discussed mutual couplings, direct couplings, or communication connections may be indirect couplings or communication connections implemented by some interfaces, devices, or modules, or may be electrical, mechanical, or other forms of connection.

The modules described as separate parts may or may not be physically separate, and parts displayed as modules may or may not be physical modules, to be specific, may be located at one position, or may be distributed on a plurality of network modules. Some or all of the modules may be selected based on actual requirements to implement the objectives of the solutions of embodiments of this application.

In addition, functional modules in embodiments of this application may be integrated into one processing module, or each of the modules may exist alone physically, or two or more modules may be integrated into one module. The integrated module may be implemented in a form of hardware, or may be implemented in a form of a software functional module.

If the integrated module is implemented in a form of a software functional module and sold or used as an independent product, the integrated module may be stored in a computer-readable storage medium. Based on this understanding, the technical solutions of this application essentially, or the part contributing to the conventional technology, or all or some of the technical solutions may be implemented in a form of a software product. The computer software product is stored in a storage medium, and includes several instructions for instructing a computer device (which may be a personal computer, a server, or a network device) to perform all or some of the steps of the method described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The terms such as "first" and "second" in this application are used to distinguish between same or similar items with basically same roles and functions. It should be understood that there is no logical or timing dependency between "first", "second", and "n^{th}", and neither a quantity nor an execution sequence is limited. It should be further understood that although the following descriptions use terms such as "first" and "second" to describe various elements, these elements should not be limited by the terms. These terms are simply used to distinguish one element from another. For example, the first deviation distance may be referred to as the second deviation distance without departing from the range of the various examples, and similarly, the second deviation distance may be referred to as the first deviation distance.

It should be further understood that sequence numbers of the processes do not mean execution sequences in embodiments of this application. The execution sequences of the processes should be determined based on functions and internal logic of the processes, and should not constitute any limitation on implementation processes of embodiments of this application.

In this application, the term "at least one" means one or more, and the term "a plurality of" in this application means two or more. For example, a plurality of first data packets mean two or more first data packets. The terms "system" and "network" are often used interchangeably in this specification.

It should be understood that the terms used in the descriptions of the various examples herein are merely intended to describe specific examples and are not intended to impose a limitation. The terms "one" ("a" and "an") and "the" of singular forms used in the descriptions of the various examples and the appended claims are also intended to include plural forms, unless otherwise specified in the context clearly.

It should be further understood that the term "and/or" used in this specification indicates and includes any combination and all possible combinations of one or more of the associated listed items. The term "and/or" describes an association relationship for describing associated objects and represents that three relationships may exist. For example, A and/or B may represent the following three cases: Only A exists, both A and B exist, and only B exists. In addition, the character "/" in this application generally indicates an "or" relationship between the associated objects.

It should be further understood that the term "include" (also referred to as "includes", "including", "comprises", and/or "comprising") used in this specification specifies presence of the stated features, integers, steps, operations, elements, and/or components, with presence or addition of one or more other features, integers, steps, operations, elements, components, and/or combinations thereof not excluded.

It should be further understood that the terms "if" and "assuming that" may be interpreted to mean "when" ("when" or "upon") or "in response to determining" or "in response to detecting". Similarly, according to the context, the phrase "if it is determined that" or "if (a stated condition or event) is detected" may be interpreted as a meaning of "when it is determined that" or "in response to determining" or "when (a stated condition or event) is detected" or "in response to detecting (a stated condition or event)".

It should be understood that determining B based on A does not mean that B is determined based only on A. B may alternatively be determined based on A and/or other information.

It should be further understood that "an embodiment", "one embodiment", and "a possible implementation" mentioned throughout the specification mean that a specific feature, structure, or characteristic related to an embodiment or an implementation is included in at least one embodiment of this application. Therefore, "in an embodiment" or "in one embodiment" or "a possible implementation" appearing throughout the specification may not necessarily refer to a same embodiment. In addition, these particular features, structures, or characteristics may be combined in one or more embodiments by using any appropriate manner.

The foregoing descriptions are merely optional embodiments of this application, but are not intended to limit this application. Any modification, equivalent replacement, or improvement made within the principle of this application should fall within the protection scope of this application.

## Claims

1. An access mode detection method, wherein the method comprises:
collecting a data feature of data transmitted by an access device, wherein the data feature indicates a feature of a terminal device that transmits the data, the terminal device is connected to the access device, and the data feature comprises at least one of a packet feature, a flow behavior feature, a network feature, or a device physical feature; and
determining an access mode of the terminal device based on the data feature.

2. The method according to claim 1, wherein the data feature comprises a plurality of packet features; and the determining the access mode of the terminal device based on the data feature comprises:
identifying an operating system under an access port of the terminal device based on the plurality of packet features; and
when operating systems under the access port are different, determining that the access mode of the terminal device is unauthorized access.

3. The method according to claim 2, wherein the identifying the operating system under the access port of the terminal device based on the plurality of packet features comprises:
identifying address information on the access port of the terminal device based on the plurality of packet features; and
when the address information on the access port is the same, identifying the operating system under the access port of the terminal device based on the plurality of packet features; and
the method further comprises:
when the address information on the access port is different, determining that the access mode of the terminal device is unauthorized access.

4. The method according to claim 1, wherein the data feature comprises the flow behavior feature; and the determining the access mode of the terminal device based on the data feature comprises:
obtaining a deviation distance between the flow behavior feature and a reference feature, wherein the reference feature is a flow behavior feature of data transmitted by a terminal device whose access mode is authorized access; and
when the deviation distance is greater than a deviation threshold, determining that the access mode of the terminal device is unauthorized access.

5. The method according to claim 1, wherein the data feature comprises at least one of the network feature or the device physical feature; and the determining the access mode of the terminal device based on the data feature comprises:
identifying a type of the terminal device based on at least one of the network feature or the device physical feature; and
when the type of the terminal device is a router or a hub, determining that the access mode of the terminal device is unauthorized access.

6. The method according to any one of claims 1 to 5, wherein after the determining the access mode of the terminal device based on the data feature, the method further comprises:
when the access mode of the terminal device is unauthorized access, blocking the terminal device from transmitting data; or
when the access mode of the terminal device is unauthorized access, sending unauthorized access information of the terminal device to a management device, wherein the unauthorized access information is used by the management device to block the terminal device from transmitting data.

7. The method according to claim 6, wherein the blocking the terminal device from transmitting the data comprises:
shutting down the access port of the terminal device;
adding the address information of the terminal device to a blocklist, wherein the blocklist is used to block, from transmitting data, a terminal device corresponding to address information in the blocklist; or
disconnecting a user in an online state on the terminal device.

8. The method according to any one of claims 1 to 7, wherein the data transmitted by the access device is data that flows from a terminal side to a network side.

9. The method according to any one of claims 1 to 8, wherein the collecting the data feature of the data transmitted by the access device comprises:
receiving an unauthorized access detection configuration command sent by the management device; and
collecting, according to the unauthorized access detection configuration command, the data feature of the data transmitted by the access device.

10. The method according to any one of claims 1 to 9, wherein the collecting the data feature of the data transmitted by the access device comprises:
copying the data transmitted by the access device, to obtain copied data; and
collecting a data feature of the copied data.

11. The method according to any one of claims 1 to 10, wherein the access device is a first-hop forwarding device for data sent by the terminal device.

12. An access mode detection method, wherein the method comprises:
receiving unauthorized access information that is of a terminal device and that is sent by an access device, wherein the unauthorized access information indicates that an access mode of the terminal device is unauthorized access; and
sending unauthorized access alarm information.

13. The method according to claim 12, wherein after the receiving the unauthorized access information that is of the terminal device and that is sent by the access device, the method further comprises:
blocking the terminal device from transmitting data.

14. The method according to claim 13, wherein the blocking the terminal device from transmitting the data comprises:
sending a shutdown instruction to the access device, wherein the shutdown instruction is used by the access device to shut down an access port of the terminal device;
sending a blocklist to the access device, wherein the blocklist comprises address information of the terminal device, and the blocklist is used by the access device to block, from transmitting data, a terminal device corresponding to address information in the blocklist; or
sending an offline instruction to the access device, wherein the offline instruction is used by the access device to disconnect a user in an online state on the terminal device.

15. The method according to any one of claims 12 to 14, wherein after the receiving the unauthorized access information that is of the terminal device and that is sent by the access device, the method further comprises:
visually presenting the unauthorized access information of the terminal device, wherein the unauthorized access information comprises at least one of a medium access control MAC address, an internet protocol IP address, the access port, access time, an unauthorized access type, or an unauthorized access determining reason.

16. The method according to any one of claims 12 to 15, wherein before the receiving the unauthorized access information that is of the terminal device and that is sent by the access device, the method further comprises:
sending an unauthorized access detection configuration command to the access device, wherein the unauthorized access detection configuration command is used by the access device to collect a data feature of data transmitted by the access device, and determine the access mode of the terminal device based on the data feature.

17. An access mode detection apparatus, wherein the apparatus comprises:
a collection module, configured to collect a data feature of data transmitted by an access device, wherein the data feature indicates a feature of a terminal device that transmits the data, the terminal device is connected to the access device, and the data feature comprises at least one of a packet feature, a flow behavior feature, a network feature, or a device physical feature; and
a determining module, configured to determine an access mode of the terminal device based on the data feature.

18. An access mode detection apparatus, wherein the apparatus comprises:
a receiving module, configured to receive unauthorized access information that is of a terminal device and that is sent by an access device, wherein the unauthorized access information indicates that an access mode of the terminal device is unauthorized access; and
an alarm module, configured to send unauthorized access alarm information.

19. An access mode detection device, wherein the device comprises a memory and a processor, the memory stores at least one computer instruction, and the at least one computer instruction is loaded and executed by the processor, to enable the device to implement the access mode detection method according to any one of claims 1 to 11, or enable the device to implement the access mode detection method according to any one of claims 12 to 16.

20. An access mode detection system, wherein the system comprises an access device and a management device, the access device is configured to implement the access mode detection method according to any one of claims 1 to 11, and the management device is configured to implement the access mode detection method according to any one of claims 12 to 16.

21. A computer-readable storage medium, wherein the computer storage medium stores at least one instruction, and the at least one instruction is loaded and executed by a processor, to enable a computer to implement the access mode detection method according to any one of claims 1 to 11, or enable the computer to implement the access mode detection method according to any one of claims 12 to 16.

22. A computer program product, wherein the computer program product comprises computer program code, and the computer program code is loaded and executed by a computer, to enable the computer to implement the access mode detection method according to any one of claims 1 to 11, or enable the computer to implement the access mode detection method according to any one of claims 12 to 16.
